# EUROPEAN PATENT SPECIFICATION

(11) **EP 4 382 278 B1**
(45) Date of publication and mention of the grant of the patent: **03.09.2025**
(21) Application number: 22460065.0
(22) Date of filing: 06.12.2022
(51) Int. Cl.: B29C 49/42, B29C 49/06

(54) **A CONTAINER OR PREFORM GRIPPER**
EIN GREIFER FÜR BEHÄLTERN ODER VORFORMLINGE
UN MANDRIN POUR CONTENEURS OU PRÉFORMES

(43) Date of publication of application: 12.06.2024
(73) Proprietor: "TES" Spolka z Ograniczona Odpowiedzialnoscia, 00-867 Warszawa (PL)
(72) Inventor: KARASZEWSKI, Waldemar, 81-549 Gdynia (PL); GOSK, Robert, 80-180 Kowale (PL); PAWLOWSKI, Tomasz, 81-589 Gdynia (PL)
(74) Representative: Pomianek, Grazyna

(56) References cited:
- DE-A1- 3 405 743
- FR-A1- 2 439 060
- FR-A1- 2 439 157
- US-A- 5 538 304
- US-B1- 6 273 705

## Description

The invention concerns a gripper for a plastic container or preform, in particular for a PET container or preform (where 'PET' stands for polyethylene terephthalate (C₁₀H₈O₄)ₙ), which enables gripping the container blown from a preform when it is being transported from the blow mould, or transporting a preform so as to remove it from the blow moulding machine whenever no container has been blown. The gripper can be used in particular in a linear blow moulding machine.

In general, preform grippers or holders can be divided into two main categories, namely the devices which couple with the preform neck either on the inside of the preform, or on the outside of the preform. To work, the holders for internal coupling are inserted into the neck section of the preform, whereas the holders for external coupling are placed on the neck section of the preform.

Known in the prior art are preform-gripping devices fitted with an annular spring which is inserted into the preform neck; alternatively used may be rings made of an elastic polymer material.

Known from the patent document US 4,672,425 is a spindle nose which is internally engaged with the preform. The spindle nose is used for conveying a thermoplastic preform through heating and blow molding stations. The inside diameter of preform is engaged by a portion of the spindle nose, said spindle nose comprising: a base, a locating stud extending from one side of said base, a flexible annular skirt extending from the other side of said base, and an air passage extending completely through said locating stud, base, and flexible skirt.

Known from document WO 02/38353 A1 is an inner-engagement pick-up plug for supporting and transporting preforms of thermoplastic resin, which is adapted to engage respective plastic preforms in view of supporting, orienting and carrying them throughout the various steps which the preforms themselves go through for further processing. The inner-engagement pick-up plug comprises: a central body, engagement means applied to said central body and adapted to engage the neck portion of the preform, in which elastic members are provided on said means so as to press them against the wall of said neck portion, wherein said central body is provided with a plurality of groove-like recesses which open towards the surface thereof that is adapted to engage the neck portion of the respective preform, and said engagement means are constituted by individual and independent gripping members that are housed in respective ones of said groove-like recesses, and said elastic members are constituted by respective springs acting between the inner wall of respective ones of said groove-like recesses and the corresponding opposed wall of said individual and independent gripping members.

Known from document WO 2009/072910 A2 is a preform holder equipped with elastic and clamping members, which has a body with an axially running air duct through which air is blown into the preform, and an embedded slidable clamp bushing fitted with an elastic locking ring which mates with the body and the inner walls of the preform neck fitted with a supporting flange, and is submitted to the action of a spring mating with a piston which is mounted in the body and is subject to a force causing the sliding of the clamp bushing and thus releasing the preform from its lock in the holder.

US 5 538 304 A discloses pneumatically-operated device in which a plurality of pistons are housed in a body portion, the pistons being operated by an air supply to move a split ring into and out of engagement with a container to move it from one location to another. The device forms an attachment which fits on to the arm of a robot-type manipulating and positioning machine. The purpose of the device is to grip polished, smooth-sided stainless steel containers so that they can be lifted and moved accurately either at will or under computer control.

US 6 273 705 B1 discloses a blow-pin assembly for use in molding hollow objects from thermoplastic parisons having a neck portion. The molding process is conducted using pressurized air. The blow-pin assembly comprises a circular body having a bottom surface. The body also includes an outer circumferential surface for receiving the neck portion of the parison.

DE 34 05 743 A1 discloses a device for gripping components with an elastic gripping surface is described. Its position is modified in relation to a holding device by the force of compressed air. The holding device is provided with a circular groove. The latter is connected in the region of the floor of the groove to a compressed air pipe. An elastic sealing ring is provided between an air inlet aperture and a surface of the holding device. An elastic ring is arranged between the said sealing ring and the region of the groove facing the surface of the holding device.

The known grippers are complex in structure and intended for orienting and transporting preforms through various stages for further processing.

The purpose of this invention is to develop a gripper which would enable holding a container during its transport from the blow mould to a container transporter, for example that which links the blow moulding machine to a bottling line, or to a transporter from which empty containers are palletised or collected manually, or a transporter which makes it possible to remove the preform from the blow moulding machine whenever the preform has not been blown. In particular, the purpose of the invention is to develop a universal gripper for a container and preform where the neck ends with a flange intended for being connected with the lid so as to achieve a hermetic closure of the container.

According to the present invention, a gripper for a container or preform, incorporating a body fitted with pressing elements which cooperate with a resilient element, wherein the pressing elements are fitted slidingly and radially in the body, and the resilient element encircles the body and presses the pressing elements towards the centre of the body, where the body features a set of ducts which supply compressed working agent to the pressing elements, thus causing them to move towards the outside of the body is characterised in that the pressing elements feature a groove for the resilient element and the body is fitted with pins which limit the movement of the pressing elements towards the outside of the body.
Preferably, compressed air is used as the working agent.
Preferably, the gripper incorporates a plate to which the body is fixed.

The solution according to this invention facilitates the transport of containers from the blow mould, especially in a linear blow moulding machine, and ensures protection of the flange of a container or preform during transport.

The invention in an illustrative embodiment is shown on figures, where:

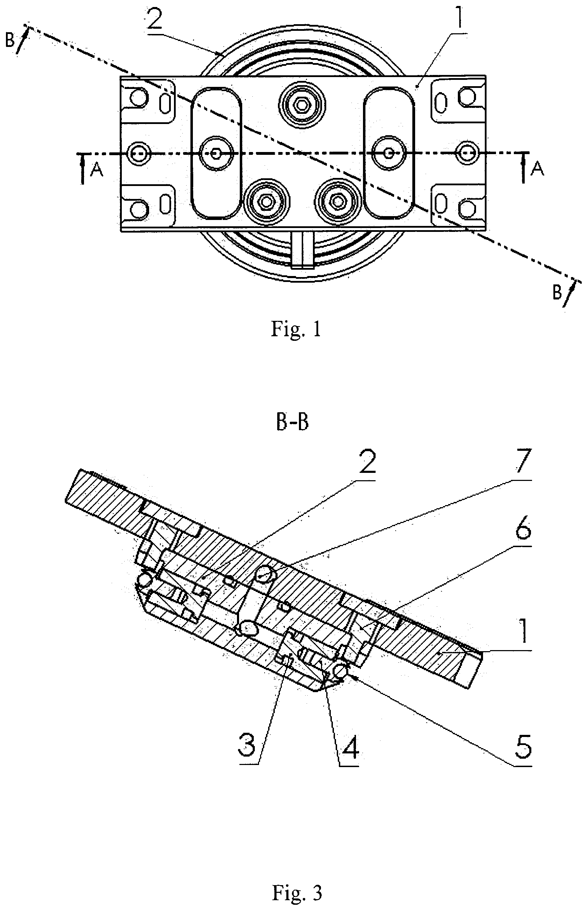

Fig. 1 depicts the gripper in bird's eye view;

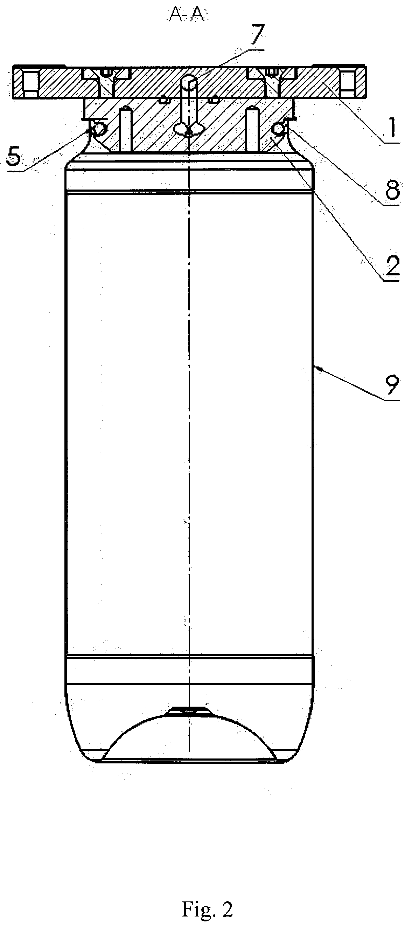

Fig. 2 presents the gripper as in Fig. 1 mounted in a container, in section along the A-A plane;
Fig. 3 shows the gripper as in Fig. 1, in section along the B-B plane.

An illustrative gripper for a container or preform incorporates a body 2 fixed to the plate 1 with bolts. The gripper features pressing elements 3 which cooperate with the resilient element 5. The pressing elements are fitted slidingly and radially in the body 2, and in the illustrative embodiment take the form of pistons with screws 4 screwed in. In this embodiment, fitted in the body 2 are four pressing elements 3 in the form of pistons with screws 4. The screws 4 feature grooves 8, placed in which is the resilient element 5, for example in the form of an O ring, which encircles the body 2 and presses the pressing elements 3 towards the centre of the body 2. The body 2 features a set of ducts 7 which supply the compressed working agent (compressed air) to the pressing elements 3 which move out from the body 2. Thanks to the moving out of the pressing elements 2 beyond the side wall of the body 2, the resilient element 5 gets pressed against the inner wall of the container 9 or preform, which enables the holding of the container 9 when it is being transported from the blow mould, or the holding of an unblown preform removed from the blow moulding machine. When there is no compressed air in the ducts 7 the resilient element 5 ensures that the pistons 3 retract towards the centre of the body 2, and the container 9 or preform gets released from the gripper. In addition, the gripper is fitted with pins 6 fitted in the plate 1 and the body 2 so as to limit the movement of the pressing elements 3 towards the outside of the body 2 and prevent them from moving too far.
In the case of a ten-cavity blow mould, 10 grippers are required for simultaneous transport of 10 containers.

### List of numerical references:

1 - plate of the body
2 - body
3 - pressing element - piston
4 - piston screw
5 - resilient element
6 - limiting pin
7 - duct
8 - groove for the resilient element
9 - container

## Claims

1. A gripper for a container or preform, incorporating a body fitted with pressing elements which cooperate with a resilient element, wherein the pressing elements (3) are fitted slidingly and radially in the body (2), and the resilient element (5) encircles the body (2) and presses the pressing elements (3) towards the centre of the body (2), where the body (2) features a set of ducts (7) which supply compressed working agent to the pressing elements (3), thus causing the pressing elements (3) to move towards the outside of the body (2), **characterised in that** the pressing elements (3) feature a groove (8) for the resilient element (5) and the body (2) is fitted with pins (6) which limit the movement of the pressing elements (3) towards the outside of the body (2).

2. The gripper according to Claim 1, **characterised in that** compressed air is used as the working agent.

3. The gripper according to Claim 1, **characterised in that** it incorporates a plate (1) to which the body (2) is fixed.

## Patentansprüche

1. Ein Greifer für Behälter oder Vorformlinge mit einem Körper, der mit Druckelementen versehen ist, die mit einem federnden Element zusammenwirken, wobei die Druckelemente (3) gleitend und radial im Körper (2) angeordnet sind und das Federelement (5) den Körper (2) umschließt und die Druckelemente (3) in die Richtung der Mitte des Körpers (2) eindrückt, wobei im Körper (2) ein Kanalsystem (7) besteht, das die Druckelemente (3) mit einem komprimierten Betriebsmedium versorgt und die Druckelemente (3) in Richtung nach außen des Körpers (2) verschiebt, **dadurch gekennzeichnet, dass** die Druckelemente (3) mit einer Nut (8) für das Federelement (5) versehen sind und im Körper (2) Stifte (6) integriert sind, die Verschiebung der Druckelemente (3) zur Außenseite des Körpers (2) hin begrenzen.

2. Der Greifer nach Anspruch 1, **dadurch gekennzeichnet, dass** das Betriebsmedium Luft ist.

3. Der Greifer nach Anspruch 1, **dadurch gekennzeichnet, dass** er eine Platte (1) umfasst, an der Körper (2) befestigt ist.

## Revendications

1. Un mandrin pour conteneurs ou préformes, comprenant un corps pourvu d'éléments de pression coopérant avec un élément élastique, les éléments de pression (3) étant disposés de manière déplaçable et radiale dans le corps (2) et l'élément élastique (5) entourant le corps (2) pressant les éléments de pression (3) vers le centre du corps (2), le corps (2) comportant un ensemble de canaux (7) alimentant les éléments de pression (3) en fluide de travail comprimé, ce qui entraîne le déplacement des éléments de pression (3) vers l'extérieur du corps (2), **caractérisé en ce que** les éléments de pression (3) sont pourvus d'une rainure (8) pour l'élément élastique (5) et des goupilles (6) sont montées dans le corps (2) pour limiter le mouvement des éléments de pression (3) vers l'extérieur du corps. (2).

2. Le mandrin selon la revendication 1, **caractérisé en ce que** le fluide de travail est l'air.

3. Le mandrin selon la revendication 1, **caractérisé en ce qu'**il comprend une plaque (1) à laquelle le corps (2) est fixé.
